# FASCICULE DE BREVET EUROPEEN

(11) **EP 3 535 090 B1**
(45) Date de publication et mention de la délivrance du brevet: **08.04.2020**
(21) Numéro de dépôt: 17822465.5
(22) Date de dépôt: 13.12.2017
(51) Int. Cl.: B24B 3/14, B23D 63/16

(54) **AIGUISEUR AUTOMATIQUE POUR CHAINE DE TRONÇONNEUSE**
AUTOMATISCHER SCHÄRFER FÜR KETTENSÄGEKETTE
AUTOMATIC SHARPENER FOR CHAIN-SAW CHAIN

(30) Priorité: 13.12.2016 CH 16412016; 17.07.2017 WO PCT/IB2017/054299
(43) Date de publication de la demande: 11.09.2019
(73) Titulaire: Usines Metallurgiques de Vallorbe SA, 1337 Vallorbe (CH)
(72) Inventeur: CURRAT, Claude, 1080 Les Cullayes (CH); GALLOPPINI, François, Pully, 1009 (CH); BERNARD, Kevin, Montagny-La-Ville, 1776 (CH); GREPPIN, Xavier, Crissier, 1023 (CH)
(74) Mandataire: reuteler & cie SA
(86) Numéro de dépôt international: PCT/IB2017/057894
(87) Numéro de publication internationale: WO 2018/109686

(56) Documents cités:
- DE-A1-102010 034 197

## Description

La présente invention se rapporte à un aiguiseur automatique de dents de coupe pour chaine de tronçonneuse.

L'affûtage des chaines de tronçonneuses, est réalisé principalement de trois manières différentes. Une première méthode manuelle, utilisable en tout lieu et notamment sur le lieu de coupe, est réalisée au moyen d'une lime ronde. Cette première méthode a l'avantage de ne pas être dépendante d'une source d'énergie du fait que cet affûtage est réalisé à la main. Par ailleurs, cette première méthode n'altère pas la dureté des dents de coupe, garantissant ainsi une coupe parfaite tout au long de la durée de vie de la chaîne de tronçonneuse.

Une seconde méthode, manuelle, est réalisée, principalement dans un atelier, au moyen d'une meule à disque actionnée manuellement. Cette seconde méthode peut être réalisée par différents modèles de machines et de meules. Cette méthode exige le démontage de la chaine de tronçonneuse. L'affûtage est plus précis mais pas plus rapide que la méthode manuelle à la lime ronde, par contre les meules abrasives utilisées, en raison de leurs vitesses de rotation, entrainent à la longue une détérioration des dents de coupe de la chaine de tronçonneuse. Ceci a pour effet de diminuer la performance de la tronçonneuse sur le terrain. De plus cette seconde méthode présente l'inconvénient de devoir déplacer et positionner manuellement les maillons sous la meule.

La troisième méthode, entièrement automatique, est réalisée au moyen d'un disque abrasif, où l'affûtage des dents de coupe de la tronçonneuse se fait sans intervention humaine, l'avancement de celles-ci se faisant automatiquement. Cette solution plus chère ayant le même désavantage lié à l'utilisation d'une meule à disque.

Différents dispositifs en lien avec un affutage automatique sont connus de l'état de la technique. WO2011023162A1, représentant l'état de la technique le plus proche de l'objet de la revendication 1, décrit un dispositif pour affûter automatiquement des chaînes de scie et un procédé correspondant, les chaînes de scie présentant des dents et étant éventuellement équipées de limiteurs de profondeur. Selon WO2011023162A1, l'affûtage des dents et/ou l'adaptation des limiteurs de profondeur de la chaîne de scie s'effectuent de manière entièrement automatique au moyen d'une lime. L'inconvénient de ce dispositif est qu'il est encombrant et nécessite une alimentation secteur. Par ailleurs, cette réalisation, en plus de ne pas être fonctionnelle pour une en production car trop complexe à mettre au point, et qui pour affuter et aiguiser une même dent de scie nécessite plusieurs opérations successives.

EP0690759 décrit des aménagements relatifs à des affûteuses automatiques de chaînes de tronçonneuse, du type comprenant un support de chaîne et des éléments permettant l'alimentation régulée par étapes, d'une rangée de maillons coupants de chaîne de tronçonneuse, à la fois pour des chaînes du type coupant à gauche et pour celles du type coupant à droite, vers un emplacement d'affûtage prédéterminé sur ledit support de chaîne. EP0690759 décrit également une affûteuse, mobile par rapport au support de chaîne et commandée automatiquement par ces éléments, servant à affûter le bord de coupe d'un maillon coupant positionné dans l'emplacement d'affûtage. Cette affûteuse est agencée de façon à affûter, en une première position, des maillons de droite, et en une seconde position, des maillons de gauche.

WO1999038638A1 décrit un aiguiseur de scies à chaîne et une scie à chaîne munie d'un tel aiguiseur, dont la surface des dents du bas de la chaîne usuellement aiguisée par le bas l'est automatiquement alors que la chaîne, entraînée par son moteur, passe sur l'aiguiseur. L'aiguisage se fait sans avoir à ôter la chaîne de son tendeur. L'aiguiseur se monte de préférence réversiblement sur une bride, elle-même montée réversiblement sur la scie. L'aiguiseur comporte une dent, placée dans un boîtier fixé au tendeur, et dont la surface supérieure frotte contre la surface inférieure des dents de la chaîne en rotation.

Le but de la présente invention est de proposer un aiguiseur permettant un affûtage automatique précis en atelier ou sur le terrain sans les problèmes liés à l'échauffement, et sans altération des dents de coupe.

Conformément à l'invention, un aiguiseur permet l'affutage automatique pour des dents de coupe d'une chaîne de tronçonneuse du type comportant des maillons et des dents de coupe comportant un limiteur de profondeur. L'aiguiseur comporte une zone d'accueil comprenant un support de chaîne apte à recevoir une chaine de tronçonneuse du type précité, l'axe longitudinal de la zone d'accueil définissant une première direction horizontale, le plan médian de la chaine parallèlement aux surfaces latérales des maillons définissant un plan vertical. L'aiguiseur comporte un moyen d'entrainement permettant une translation horizontale, de préférence une alimentation régulée, automatiquement, vers l'avant et par étapes, de la chaine de tronçonneuse reçue dans la zone d'accueil. L'aiguiseur comporte en outre un moyen d'aiguisage agencé pour aiguiser les dents de coupe selon différents angles d'aiguisage, après chaque translation d'une chaine de tronçonneuse, et un moyen de rabotage du limiteur de profondeur d'une dent de coupe, le moyen de rabotage et le moyen d'aiguisage comprenant respectivement une lime plate et une lime ronde fixées de manière amovible dans un porte-lime. Le moyen d'aiguisage et le moyen de rabotage sont agencés pour aiguiser et raboter simultanément une même dent de coupe selon un mouvement linéaire et alternatif du porte-lime dans un plan compris entre +/-10° par rapport à la première direction horizontale. L'aiguiseur automatique comporte en outre un moyen de positionnement vertical du porte-lime agencé pour exercer, dans la direction verticale, une pression de rabotage de la lime plate sur la dent de coupe lors du mouvement linéaire et alternatif de la lime plate simultanément avec le mouvement linéaire et alternatif de la lime ronde.

Dans une forme d'exécution, le porte-lime comprend un moyen d'ajustement de l'écart vertical entre l'axe de la lime ronde et le plan principal de la lime plate.

Dans une forme d'exécution, l'aiguiseur est agencé de manière à ce que, le moyen de positionnement vertical contient un moteur électrique et est agencé pour ajuster la pression de rabotage selon l'intensité du courant électrique circulant dans ce moteur.

Dans une forme d'exécution, le moyen de positionnement vertical du porte-lime est agencé pour exercer une pression de rabotage qui est diminuée au moins lors d'une dernière période de mouvement linéaire et alternatif.

Dans une forme d'exécution, le moyen de positionnement horizontal contient un moteur électrique et est agencé pour ajuster une pression d'aiguisage sur la lime ronde selon l'intensité du courant électrique circulant dans ce moteur électrique.

Selon cette forme d'exécution, le moyen de positionnement horizontal du porte-lime est agencé pour exercer une pression d'aiguisage qui est diminuée au moins lors d'une dernière période de mouvement linéaire et alternatif.

Dans une forme d'exécution et pour obtenir une meilleure performance de coupe, le porte-lime est agencé pour se déplacer en translation selon un angle d'attaque des moyens de rabotage et d'aiguisage sur la dent compris entre +/- 10 degrés par rapport à la première direction horizontale.

De préférence, l'angle d'attaque est au moins +/- 1 degré et donc toujours différent de zéro.

Dans une forme d'exécution, l'aiguiseur comporte un moyen d'ajustement du porte-lime, agencé pour être positionné dans des rainures disposées parallèlement sur le porte-lime, chaque rainure étant d'une profondeur différente correspondant chacune à une valeur déterminé de l'écart vertical entre l'axe de la lime ronde et le plan principal de la lime plate.

De préférence, l'aiguiseur comporte des moyens de maintien agencés pour maintenir une chaine de tronçonneuse pendant des opérations d'aiguisage et de rabotage, lesdits moyens de maintien comportant notamment un doigt d'arrêt.

Dans une forme d'exécution, l'aiguiseur comporte un guide-lime, lequel guide le porte-lime en translation, au moyen d'un système à crémaillère entrainé par un moteur pas à pas.

L'aiguiseur automatique devant pouvoir être capable d'aiguiser chaque chaine de tronçonneuse en fonction de ses caractéristiques, des moyens de commande sont avantageusement agencés pour sélectionner un pas de dents, un nombre de dents, un profil de dents, une fonction aiguisage d'une dent de coupe et une fonction de rabotage d'un limiteur de profondeur d'une dent de coupe d'une chaine de tronçonneuse. Ainsi, pour une navigation simplifiée à travers le choix des caractéristiques, l'aiguiseur comporte en outre un affichage digital, notamment un affichage LCD pour afficher les informations des moyens de commande. Une telle gestion automatique de l'affutage d'une chaine est possible grâce aux moyens de commande qui comportent notamment un microcontrôleur agencé sur une carte électronique.

Dans une forme d'exécution, les moyens d'aiguisage et de rabotage sont dédoublés et disposés de part et d'autre du support de chaine, de manière à agir concomitamment ou successivement sur une dent de coupe gauche et une dent de coupe droite d'une chaine de tronçonneuse de type à maillons alternés.

Dans une autre forme d'exécution, les moyens d'aiguisage et de rabotage sont montés sur un support pivotable entre deux positions symétriques, de manière à agir successivement sur l'ensemble des dents de coupe gauche et sur l'ensemble des dents de coupe droite d'une chaine de tronçonneuse de type à maillons alternés, sans avoir à retourner la chaine dans son support de chaine.

Selon cette autre forme d'exécution, l'aiguiseur pour aiguiser une chaine comportant des dents de coupe pourvues d'une partie en forme de toit comporte des moyens de détection agencés pour détecter ladite partie en forme de toit la plus petite en hauteur de manière à déterminer un point de référence pour aiguiser uniformément l'ensemble des autres parties en forme de toit des dents de coupe d'une chaine de tronçonneuse.

Lors de l'utilisation, l'usure d'une dent de coupe d'une chaine de tronçonneuse peut être détectée par un utilisateur qui déterminerait lui-même les réglages à effectuer sur les moyens de commande de l'aiguiseur automatique.

Les moyens d'entrainement d'une chaine, les moyens d'aiguisage et les moyens de rabotage peuvent notamment être entrainés par des moteurs pas à pas ou par un système pneumatique.

Les caractéristiques de l'invention apparaitront plus clairement à la lecture de la description de plusieurs formes d'exécution données uniquement à titre d'exemple, nullement limitative en se référant aux figures schématiques, dans lesquelles :
- La figure 1 représente une vue schématique de face d'un aiguiseur automatique ;
- La figure 2 représente une vue de dessus d'un aiguiseur automatique ;
- La figure 3 représente une vue de dessus de l'aiguiseur de la figure 2 dans lequel des supports pivotables portant des moyens d'aiguisage et de rabotage sont pivotés symétriquement ;
- La figure 4 représente une vue de côté d'un aiguiseur en position de repos ;
- La figure 5 représente l'aiguiseur de la figure 4 en position de travail ;
- La figure 6 représente une vue en perspective de l'aiguiseur selon la présente invention ;
- Les figures 7A et 7B représentent une vue de de dessus d'un porte lime de l'aiguiseur, l'un avec les limes plate et ronde l'autre sans les limes ;
- La figure 8 représente une vue de côté partielle du porte lime de la figure 7A dans lequel l'écart vertical entre l'axe de la lime ronde et le plan principal de la lime plate est au minimum ;
- La figure 9 représente une vue en perspective d'une dent de coupe ;
- La figure 10 représente une vue en coupe de moyens d'aiguisage et de rabotage aiguisant une dent de coupe ;
- La figure 11 représente une vue en perspective de moyens de maintien d'une chaine de tronçonneuse pendant une opération d'aiguisage ; et
- La figure 12 représente une vue de dessus d'un aiguiseur automatique.

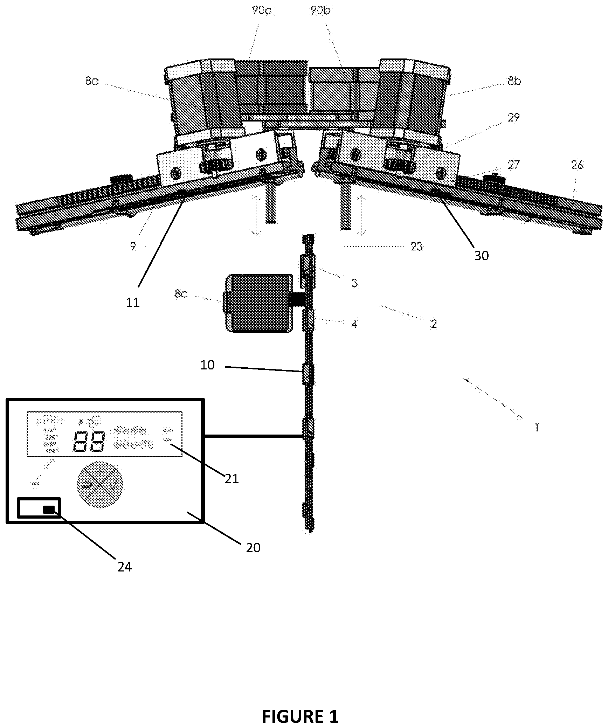

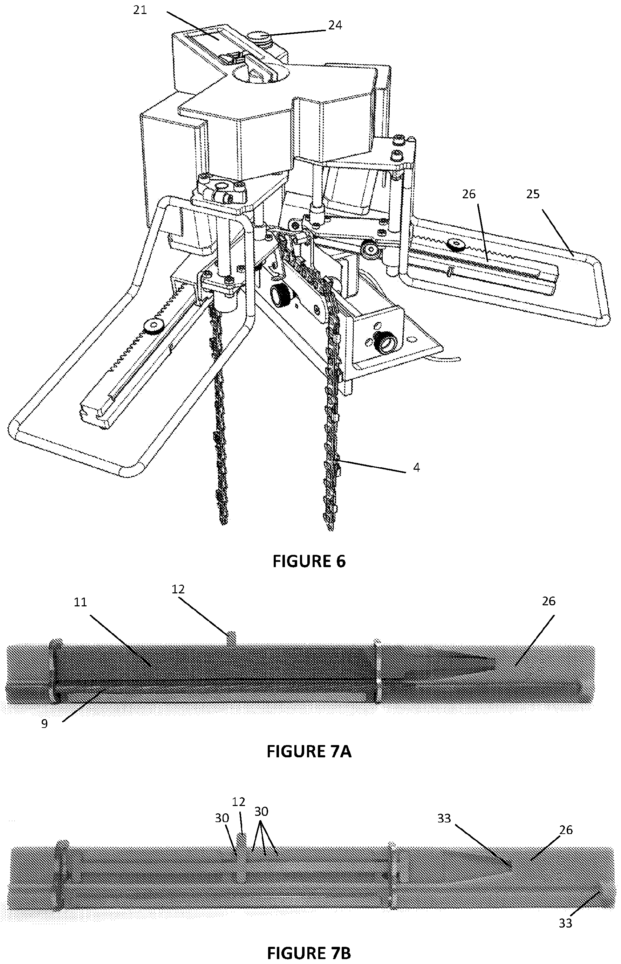

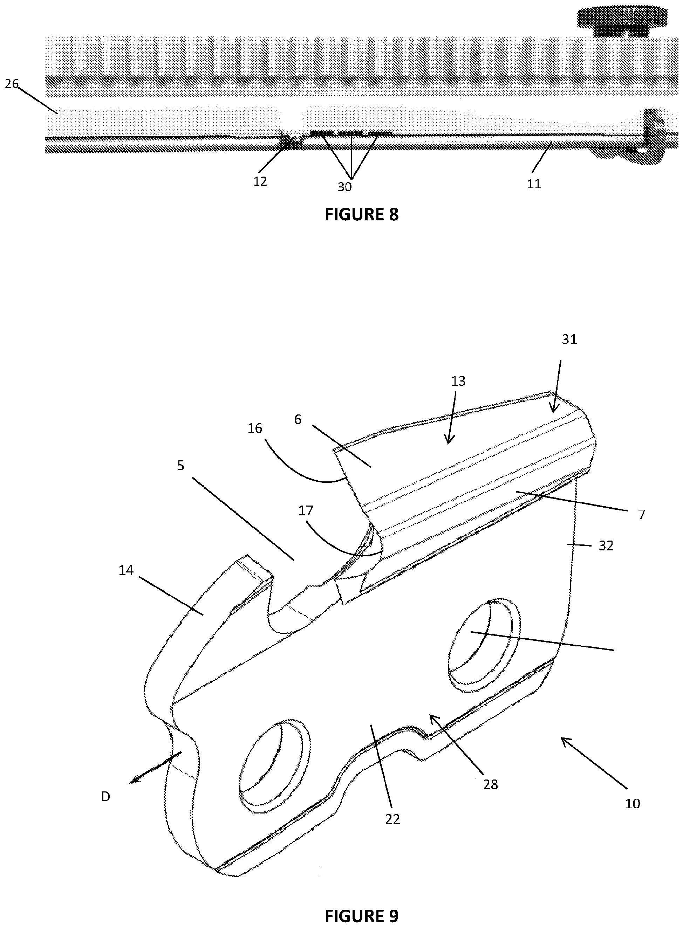

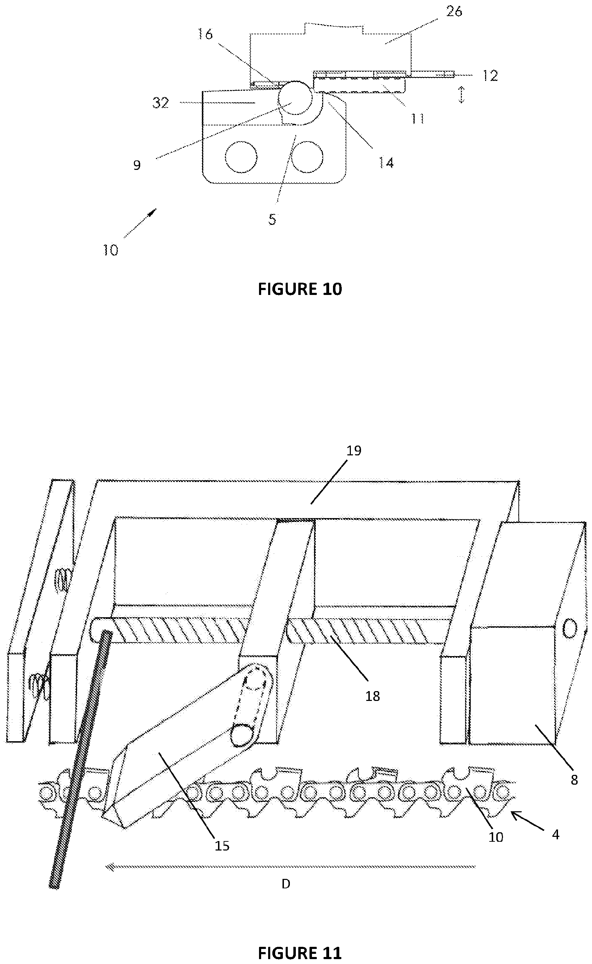

La figure 1 et la figure 6 illustrent un aiguiseur automatique 1 pour dents de coupe d'une chaîne de tronçonneuse 4 du type comportant des maillons et des dents de coupe comportant un limiteur de profondeur. L'aiguiseur comporte une zone d'accueil 2 comprenant un support 3 de chaîne apte à recevoir une chaine de tronçonneuse 4 du type précité, l'axe longitudinal de la zone d'accueil 2 définissant une première direction horizontale. Le plan médian de la chaine parallèlement aux surfaces latérales 32 (figures 9 et 10) des maillons définissent un plan vertical. L'aiguiseur comporte un moteur pas à pas 8c permettant une translation horizontale, régulée automatiquement, vers l'avant et par étapes, de ladite chaine de tronçonneuse 4 reçue dans la zone d'accueil 2. L'aiguiseur comporte en outre un moyen d'aiguisage 9 agencé pour aiguiser les dents de coupe 10 selon différents angles d'aiguisage, après chaque translation horizontale d'une chaine de tronçonneuse 4, et un moyen de rabotage 11 (figure 10) d'un limiteur de profondeur 14 (figure 9) d'une dent de coupe 10. Le moyen de rabotage 11 (figures 6 et 10) et le moyen d'aiguisage 9 comprennent respectivement une lime plate et une lime ronde fixées de manière amovible dans un porte-lime 26 (voir figure 7A).

Dans cet exemple, le moyen d'aiguisage 9 et le moyen de rabotage 11 sont agencés pour aiguiser et raboter simultanément une même dent de coupe 10 selon un mouvement linéaire et alternatif du porte-lime 26 dans un plan incliné d'environ 10°.

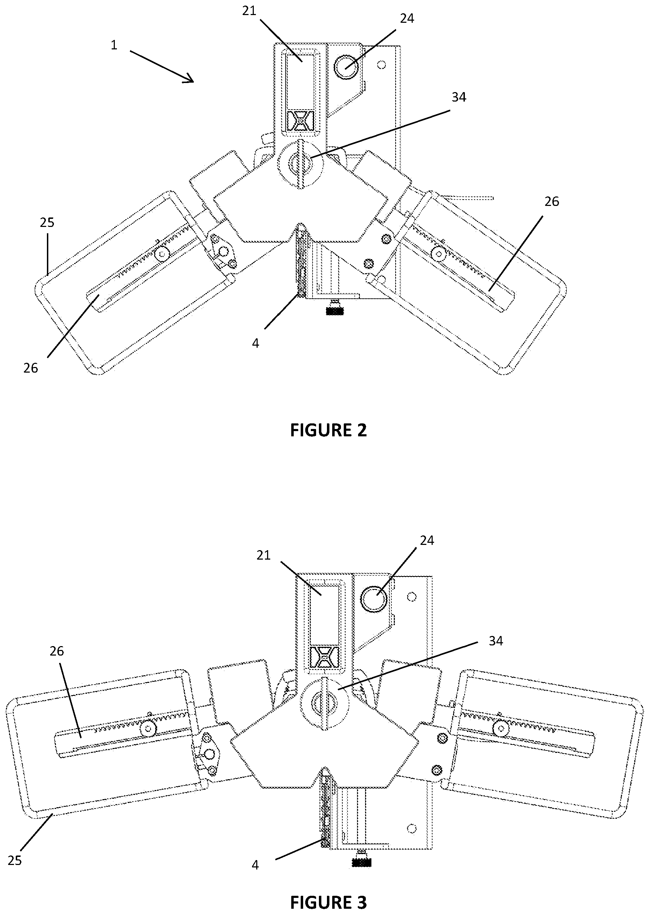

Comme illustré aux figures 2 et 3, l'aiguiseur présente deux bras pivotables autour d'un centre géométrique, chaque bras portant un porte-lime 26. Les bras sont agencés pour pivoter de manière à ce que chaque porte-lime 26 puisse être disposé pour aiguiser et affuter une dent de chaine de tronçonneuse avec un angle compris de préférence entre 10° et 35° par rapport au plan médian de la chaine. Dans cet exemple, le pivotement des bras se fait au moyen d'une molette 34 agencée au niveau du centre géométrique de pivotement des bras. Chaque porte-lime 26 coulisse lors de l'aiguisage et le rabotage simultané d'une dent de chaine de tronçonneuse. Pour éviter tout risque pour un utilisateur, chaque bras comporte une barrière de sécurité 25 empêchant ainsi le porte lime 26 de rentrer en contact avec un utilisateur. La rotation des bras permet de traiter différents types de dents de chaine de tronçonneuse.

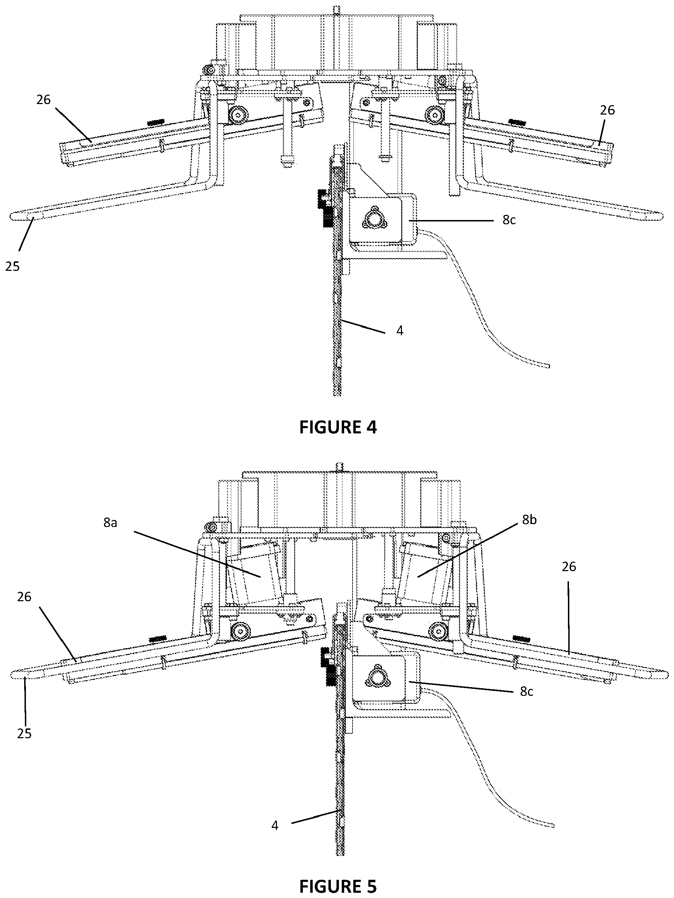

L'aiguiseur comporte une position de repos (voir figure 4) pendant laquelle les porte-limes 26 sont dans une position haute et une position de travail (voir figure 5) pendant laquelle les porte-limes 26 sont dans une position basse et agencés pour aiguiser et affuter des dents de chaine de tronçonneuse.
- La figure 4 représente une vue de côté d'un aiguiseur en position de repos ;
- La figure 5 représente l'aiguiseur de la figure 4 en position de travail ;
- La figure 6 représente une vue en perspective de l'aiguiseur selon la présente invention ;

La figure 9 illustre une dent de coupe 10 en tenant compte du fait que les dents de coupe peuvent légèrement différer l'une de l'autre. Ainsi, la dent illustrée à la figure 9 est composée d'un corps de base 22 avec un élément de coupe 13 fixé au corps de base 22. Le corps de base 22 présente un bord supérieur 31 et une zone d'embase inférieure 28. Avant l'élément de coupe 13, dans le sens de déplacement D, il est prévu sur le corps de base 22 un limiteur de profondeur 14. L'élément de coupe 13 comporte une gouge 6, partie en forme de toit avec une arête de coupe 16 en forme de toit, et une partie latérale 7 avec une arête de coupe latérale 17. La partie latérale 7 s'étend au-dessus d'une surface latérale 32 du corps de base 22. La partie en forme de toit 6 s'étend depuis le bord supérieur 31 du corps de base 22. Il y a un creux de dégagement 5 formé dans le corps de base 22 entre l'arête de coupe latérale 17 et le limiteur de profondeur 14, pour l'évacuation des copeaux, étant précisé que l'élément de coupe 13 dépasse dans le creux de dégagement 5, dans le sens de déplacement D.

L'aiguiseur illustré aux figures 1 à 6 est agencé de manière à ce que, lors d'un mouvement linéaire et alternatif, le moyen d'aiguisage 9 exerce, dans la direction de la translation mais en sens opposé, une pression d'aiguisage sur la dent de coupe 10, cette pression d'aiguisage sur la dent de coupe étant fournie au moins par le moyen d'entrainement 8c. Toujours selon cet exemple, le moyen de rabotage 11 exerce, dans la direction verticale, une pression de rabotage sur la dent de coupe, cette pression de rabotage étant fournie par un moyen de positionnement vertical 90a, 90b du porte-lime 26. Ainsi, dans cet exemple, l'aiguiseur comporte un moyen de réglage de l'intensité du courant électrique circulant dans un premier moteur électrique contenu dans le moyen d'entrainement 8c et dans un deuxième moteur électrique contenu dans le moyen de positionnement 90a, 90b de manière à ce que la pression d'aiguisage et la pression de rabotage sont ajustables par ledit moyen de réglage. Lors de l'aiguisage, la pression d'aiguisage est diminuée, et la pression de rabotage est diminuée lors d'une dernière période du mouvement linéaire et alternatif.

L'aiguiseur automatique illustré à la figure 1 comporte des moyens de commande 20 agencés pour sélectionner un pas de dents, un nombre de dents, un profil de dents, une fonction aiguisage et/ou rabotage d'une chaine de tronçonneuse 4 du type précité. L'aiguiseur 1 comporte en outre un affichage digital, notamment un affichage LCD 21 pour afficher les informations desdits moyens de commande 20. Les angles d'aiguisage doivent être respectés et sélectionnables par un utilisateur par un réglage manuel. L'utilisateur rentre les paramètres de la chaîne qu'il veut aiguiser comme par exemple le pas de la chaîne avec les valeurs suivantes 1/4",.325",3/8" et .404", le nombre de maillons d'entraînement, la périodicité des dents de la chaîne avec par exemple les valeurs suivantes 1/2 ou 1/3 maillons. L'utilisateur peut lancer/arrêter un cycle d'aiguisage en pressant sur un bouton Start/Stop 24. L'affichage LCD 21 et une interface simple à quatre boutons (+, -, retour, valider) permet de saisir et informer l'utilisateur des paramètres de la machine. Les limes rondes à chaîne sont utilisées pour l'aiguisage, différents diamètres étant à disposition pour différents types de chaîne.

Les moyens d'aiguisage 9 et les moyens de rabotage 11 sont agencés sur un porte-lime 26 qui se déplace en translation, guidé par un guide-lime 27, au moyen d'un système à crémaillère 29 entrainé par un moteur pas à pas 8a, 8b (voir figure 1 et figure 7A).

Comme illustré à la figure 10, l'aiguiseur comporte des moyens de rabotage 11 d'un limiteur de profondeur 14 d'une dent de coupe 10 d'une chaine de tronçonneuse. Les moyens d'aiguisage comportent une lime ronde 9 amovible. Les moyens de rabotage comportent une lime plate 11 amovible. Les moyens d'aiguisage 9 sont agencés pour aiguiser chaque dent de coupe 10, lesdits moyens se déplaçant en translation parallèlement à une arête de coupe 16 à travers un creux de dégagement 5 d'une dent de coupe 10, lesdits moyens d'aiguisage 9 étant positionné angulairement à une surface latérale 32 d'une dent de coupe 10. Le porte-lime 26 comprend un moyen d'ajustement 12 de l'écart vertical entre l'axe de la lime ronde 9 et le plan principal de la lime plate 11. Le porte lime 26 comporte par ailleurs des éléments de blocage 33 pour maintenir en position la lime plate 11 et la lime ronde 9.

Comme illustré à la figure 7B et à la figure 8, le porte lime 26 comporte des rainures 30 parallèles entre elles pour maintenir en position le moyen d'ajustement 12. Dans la position illustrée à la figure 8, le moyen d'ajustement 12 est agencé pour que l'écart vertical entre l'axe de la lime ronde et le plan principal de la lime plate 11 soit le plus petit possible. Plus on décale sur la droite le moyen d'ajustement 12 sur les rainures 30, plus l'écart vertical entre l'axe de la lime ronde et le plan principal de la lime plate 11 sera grand.

Comme illustré à la figure 11, les moyens de maintien 19 sont agencés pour maintenir une chaine de tronçonneuse 4 pendant des opérations d'aiguisage et de rabotage, lesdits moyens de maintien 19 comportant notamment un doigt d'arrêt 15. Le doigt d'arrêt 15 pivote, à une de ses extrémités, autour d'un axe et se lève lorsque la chaine 4 avance pour se positionner sur la partie arrière de la dent de coupe suivante qui se trouve alors bloquée par l'extrémité du doigt d'arrêt 15. La chaine est entrainée dans un sens de déplacement D. Elle est maintenue fermement en position pendant une opération d'affutage. Dans cet exemple, le doigt d'arrêt 15 sur une vis-sans-fin 18 permet audit doigt d'arrêt 15 de bloquer la chaine de tronçonneuse 4 pendant qu'elle est affutée.

Dans l'exemple illustré à la figure 1, l'aiguiseur comporte des moyens de détection 23, notamment des capteurs, pour détecter l'usure d'une dent de coupe d'une chaine de tronçonneuse 4. Les moyens de détection 23 sont agencés pour détecter une partie en forme de toit, d'une dent de coupe la plus petite en hauteur de manière à déterminer un point de référence pour aiguiser uniformément l'ensemble des autres parties en forme de toit des dents de coupe d'une chaine de tronçonneuse 4. Au fur et à mesure de l'aiguisage de la gouge, le limiteur de profondeur 14 (figure 9) doit être raboté pour garder la même profondeur de coupe, garantissant ainsi la haute performance de la chaîne.

L'aiguiseur illustré est agencé pour fonctionner sur batterie. La carte électronique fonctionnera avec une tension régulée de 12VDC ou 24VDC de manière à pouvoir se brancher par exemple sur un allume-cigare d'un véhicule. Dans une autre version, l'aiguiseur peut être agencé pour fonctionner sur secteur. En fonction du pays, cette tension secteur peut varier par exemple du 220/230VAC ou 110/120VAC à des fréquences de 50Hz ou 60Hz.

L'aiguiseur comporte des limes amovibles qu'un utilisateur peut changer lui-même si besoin.

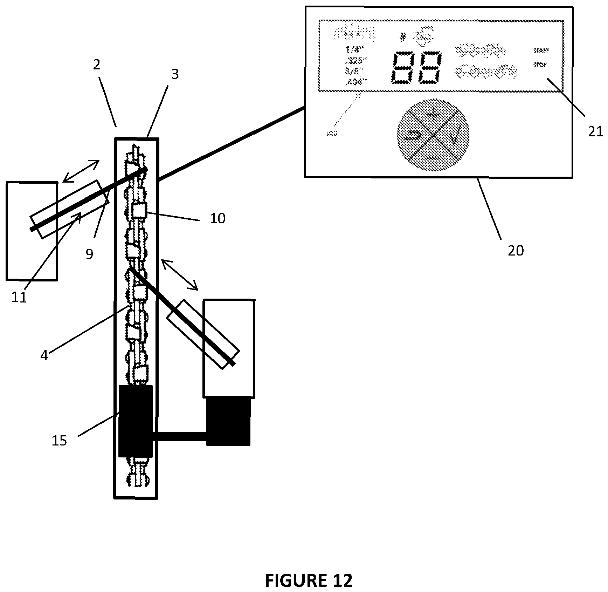

Comme illustré à la figure 12, les moyens d'aiguisage 9 et de rabotage 11 sont dédoublés et disposés de part et d'autre du support de chaine 3, de manière à agir concomitamment sur une dent de coupe gauche et une dent de coupe droite d'une chaine de tronçonneuse de type à maillons alternés. Ainsi, l'aiguiseur automatique 1 pour dents de coupe 10 d'une chaîne de tronçonneuse 4 comporte une zone d'accueil 2 comprenant un support de chaîne 3 recevant une chaine de tronçonneuse 4. Un moyen d'entrainement permet l'alimentation régulée automatiquement, vers l'avant et par étapes, de la chaine de tronçonneuse 4 reçue dans la zone d'accueil 2. Les moyens d'aiguisage 9 sont agencés pour aiguiser les dents de coupe 10 de la chaine de tronçonneuse 4 lors de son avance selon différents angles d'aiguisage. Les moyens d'aiguisage 9 sont agencés pour aiguiser alternativement une dent de coupe droite 10 et une dent de coupe gauche 10 décalées longitudinalement l'une par rapport à l'autre et à différents angles d'aiguisage.

La figure 12 illustre un aiguiseur automatique 1 pour dents de coupe d'une chaîne de tronçonneuse 4 du type comportant des maillons et des dents de coupe gauches et droites. Les dents de coupes gauche et droite sont symétriques et décalées longitudinalement l'une par rapport à l'autre.

Pour un gain de temps et un minimum de manutention, les moyens d'aiguisage 9 et de rabotage 11 sont montés sur un support pivotable (ou bras) entre deux positions symétriques, de manière à agir successivement sur l'ensemble des dents de coupe gauche et sur l'ensemble des dents de coupe droite d'une chaine de tronçonneuse de type à maillons alternés, sans avoir à retourner la chaine dans son support 3 de chaine.

L'aiguiseur selon la présente invention permet donc d'affuter à "froid" les dents de coupe gauche et les dents de coupe droite décalées longitudinalement l'une par rapport à l'autre et à différents angles d'aiguisage. L'utilisation de limes rondes et optionnellement de limes plates offre un meilleur confort et une meilleure précision de travail en se prémunissant notamment des risques liés à l'utilisation des disques abrasifs, comme par exemple la projection de copeaux.

L'aiguiseur automatique de la présente invention peut avantageusement être livré sous forme de kit dans un carton pesant moins de 20 kg. Une fois l'aiguiseur assemblé, son faible poids lui permet d'être transportable aisément et de le fixer sur un support de travail en moins d'une minute. L'aiguiseur est dans cet exemple de petite taille avec notamment une hauteur inférieure à 26 cm, une profondeur inférieure à 35 cm et une largeur inférieure à 35 cm.

Par ailleurs, les réglages/paramétrages sont très simples à gérer depuis l'affichage à écran.

L'aiguiseur automatique portatif présente en outre l'avantage de travailler de manière autonome, une fois les réglages effectués, sans nécessiter de surveillance d'un utilisateur.

## Revendications

1. Aiguiseur automatique (1) pour dents de coupe (10) d'une chaîne de tronçonneuse (4) du type comportant des maillons et des dents de coupe (10) comportant un limiteur de profondeur (14), l'aiguiseur comportant :
- une zone d'accueil (2) comprenant un support de chaîne (3) apte à recevoir une chaine de tronçonneuse (4) du type précité, l'axe longitudinal de la zone d'accueil définissant une première direction horizontale, le plan médian de la chaine parallèlement aux surfaces latérales (32) des maillons définissant un plan vertical,
- un moyen d'entrainement (8c) permettant une translation horizontale, de préférence régulée automatiquement, vers l'avant et par étapes, de ladite chaine de tronçonneuse (4) reçue dans la zone d'accueil (2),
- un moyen d'aiguisage (9) agencés pour aiguiser les dents de coupe (10) selon différents angles d'aiguisage, après chaque translation d'une chaine de tronçonneuse (4), et un moyen de rabotage (11) du limiteur de profondeur (14) d'une dent de coupe (10), le moyen de rabotage (11) et le moyen d'aiguisage (9) comprenant respectivement une lime plate et une lime ronde fixées de manière amovible dans un porte-lime (26),
**Caractérisé en ce que**
le moyen d'aiguisage (9) et le moyen de rabotage (11) sont agencés pour aiguiser et raboter simultanément une même dent de coupe (10) selon un mouvement linéaire et alternatif du porte-lime (26) dans un plan compris entre +/-10°par rapport à la première direction horizontale,
et **en ce que** l'aiguiseur automatique (1) comporte en outre un moyen de positionnement vertical (90a, 90b) du porte-lime (26) agencé pour exercer, dans la direction verticale, une pression de rabotage de la lime plate sur la dent de coupe (10) lors du mouvement linéaire et alternatif de la lime plate simultanément avec le mouvement linéaire et alternatif de la lime ronde.

2. Aiguiseur selon la revendication 1, dans lequel le porte-lime (26) comprend un moyen d'ajustement (12) de l'écart vertical entre l'axe de la lime ronde et le plan principal de la lime plate.

3. Aiguiseur selon la revendication 1 ou 2, dans lequel ledit moyen de positionnement vertical (90a, 90b) contient un moteur électrique et est agencé pour ajuster la pression de rabotage selon l'intensité du courant électrique circulant dans ce moteur électrique.

4. Aiguiseur selon une des revendications précédentes, dans lequel le moyen de positionnement vertical (90a, 90b) du porte-lime (26) est agencé pour exercer une pression de rabotage qui est diminuée au moins lors d'une dernière période de mouvement linéaire et alternatif.

5. Aiguiseur selon une des revendications précédentes, dans lequel ledit moyen de positionnement horizontal (8c) contient un moteur électrique et est agencé pour ajuster une pression d'aiguisage sur la lime ronde selon l'intensité du courant électrique circulant dans ce moteur électrique.

6. Aiguiseur selon la revendication 5, dans lequel le moyen de positionnement horizontal (8c) du porte-lime (26) est agencé pour exercer une pression d'aiguisage qui est diminuée au moins lors d'une dernière période de mouvement linéaire et alternatif.

7. Aiguiseur selon l'une des revendications précédentes, dans lequel le porte-lime (26) est agencé pour se déplacer en translation selon un angle d'attaque compris entre +/- 10 degré par rapport à la première direction horizontale.

8. Aiguiseur selon la revendication 7, dans lequel l'angle d'attaque est au moins +/-1 degré.

9. Aiguiseur selon l'une des revendications précédentes comportant un moyen d'ajustement (12) du porte-lime (26), agencé pour être positionné dans des rainures (30) disposées parallèlement sur le porte-lime (26), chaque rainure (30) étant d'une profondeur différente correspondant chacune à une valeur déterminé de l'écart vertical entre l'axe de la lime ronde et le plan principal de la lime plate.

10. Aiguiseur selon l'une des revendications précédentes, comportant des moyens de maintien (19) agencés pour maintenir une chaine de tronçonneuse (4) pendant des opérations d'aiguisage et de rabotage, lesdits moyens de maintien (19) comportant notamment un doigt d'arrêt (15).

11. Aiguiseur selon l'une des revendications précédentes, comportant un guide lime (27) lequel guide le porte-lime (26) en translation au moyen d'un système à crémaillère (29) entrainé par un moteur pas à pas (8a, 8b).

12. Aiguiseur selon l'une des revendications précédentes, comportant des moyens de commande (20) agencés pour sélectionner un pas de dents, un nombre de dents, un profil de dents, une fonction aiguisage d'une dent de coupe (10) et une fonction de rabotage d'un limiteur de profondeur (14) d'une dent de coupe (10) d'une chaine de tronçonneuse (4), l'aiguiseur (1) comportant en outre un affichage digital, notamment un affichage LCD, pour afficher les informations desdits moyens de commande (20).

13. Aiguiseur selon l'une des revendications précédentes, dans lequel les moyens d'aiguisage (9) et de rabotage (11) sont dédoublés et disposés de part et d'autre du support de chaine (3), de manière à agir concomitamment ou successivement sur une dent de coupe gauche et une dent de coupe droite d'une chaine de tronçonneuse de type à maillons alternés.

14. Aiguiseur selon l'une des revendications 1 à 12, dans lequel les moyens d'aiguisage (9) et de rabotage (11) sont montés sur un support pivotable entre deux positions symétriques, de manière à agir successivement sur l'ensemble des dents de coupe gauche et sur l'ensemble des dents de coupe droite d'une chaine de tronçonneuse de type à maillons alternés, sans avoir à retourner la chaine dans son support de chaine (3).

15. Aiguiseur selon l'une des revendications précédentes, pour aiguiser une chaîne comportant des dents de coupe pourvues d'une partie en forme de toit, l'aiguiseur comportant des moyens de détection (23) agencés pour détecter ladite partie en forme de toit (6) la plus petite en hauteur de manière à déterminer un point de référence pour aiguiser uniformément l'ensemble des autres parties en forme de toit (6) des dents de coupe d'une chaine de tronçonneuse (4).

16. Aiguiseur selon l'une des revendications précédentes, comportant des moyens de détection (23), notamment des capteurs, pour détecter une dent de coupe (10) de plus forte usure.

## Patentansprüche

1. Automatischer Schärfer (1) für Schneidezähne (10) einer Kettensägekette (4) von dem Typ, der Kettenglieder und Schneidezähne (10) umfasst, die einen Tiefenbegrenzer (14) umfassen, wobei der Schärfer umfasst:
- einen Aufnahmebereich (2), der einen Kettenträger (3) umfasst, der geeignet ist, eine Kettensägekette (4) vom vorhergehend genannten Typ aufzunehmen, wobei die Längsachse des Aufnahmebereichs eine erste horizontale Richtung definiert, wobei die Mittelebene der Kette parallel zu den Seitenflächen (32) der Kettenglieder eine vertikale Ebene definiert,
- ein Antriebsmittel (8c), das eine, vorzugsweise automatisch geregelte, horizontale Translation der in dem Aufnahmebereich (2) aufgenommenen Kettensägekette (4) nach vorne und in Schritten ermöglicht,
- ein Schärfungsmittel (9), das eingerichtet ist, um die Schneidezähne (10) gemäß verschiedenen Schärfungswinkeln nach jeder Translation einer Kettensägekette (4) zu schärfen, und ein Mittel (11) zum Hobeln des Tiefenbegrenzers (14) eines Schneidezahns (10), wobei das Hobelmittel (11) und das Schärfungsmittel (9) jeweils eine Flachfeile und eine Rundfeile umfassen, die auf abnehmbare Weise in einem Feilenhalter (26) befestigt sind,
**dadurch gekennzeichnet, dass**
das Schärfungsmittel (9) und das Hobelmittel (11) eingerichtet sind, um einen selben Schneidezahn (10) gleichzeitig gemäß einer Linear- und Hin- und Herbewegung des Feilenhalters (26) in einer Ebene, die zwischen +/- 10° in Bezug auf die erste horizontale Richtung enthalten ist, zu schärfen und zu hobeln,
und dadurch, dass der automatische Schärfer (1) ferner ein Mittel (90a, 90b) zur vertikalen Positionierung des Feilenhalters (26) umfasst, das eingerichtet ist, um bei der Linear- und Hin- und Herbewegung der Flachfeile gleichzeitig mit der Linear- und Hin- und Herbewegung der Rundfeile in der vertikalen Richtung einen Hobeldruck der Flachfeile auf den Schneidezahn (10) auszuüben.

2. Schärfer nach Anspruch 1, wobei der Feilenhalter (26) ein Mittel (12) zum Anpassen des vertikalen Abstands zwischen der Achse der Rundfeile und der Hauptebene der Flachfeile umfasst.

3. Schärfer nach Anspruch 1 oder 2, wobei das Mittel (90a, 90b) zur vertikalen Positionierung einen Elektromotor umfasst und eingerichtet ist, um den Hobeldruck gemäß der Stärke des elektrischen Stroms anzupassen, der in diesem Elektromotor fließt.

4. Schärfer nach einem der vorhergehenden Ansprüche, wobei das Mittel (90a, 90b) zur vertikalen Positionierung des Feilenhalters (26) eingerichtet ist, um einen Hobeldruck auszuüben, der zumindest während eines letzten Zeitraums der Linear- und Hin- und Herbewegung verringert wird.

5. Schärfer nach einem der vorhergehenden Ansprüche, wobei das Mittel (8c) zur horizontalen Positionierung einen Elektromotor enthält und eingerichtet ist, um einen Schärfungsdruck auf die Rundfeile gemäß der Stärke des elektrischen Stroms anzupassen, der in diesem Elektromotor fließt.

6. Schärfer nach Anspruch 5, wobei das Mittel (8c) zur horizontalen Positionierung des Feilenhalters (26) eingerichtet ist, um einen Schärfungsdruck auszuüben, der zumindest während eines letzten Zeitraums der Linear- und Hin- und Herbewegung verringert wird.

7. Schärfer nach einem der vorhergehenden Ansprüche, wobei der Feilenhalter (26) eingerichtet ist, um sich translatorisch gemäß einem Arbeitswinkel zu verlagern, der zwischen +/- 10 Grad in Bezug auf die erste horizontale Richtung enthalten ist.

8. Schärfer nach Anspruch 7, wobei der Arbeitswinkel mindestens +/- 1 Grad beträgt.

9. Schärfer nach einem der vorhergehenden Ansprüche, der ein Mittel (12) zum Anpassen des Feilenhalters (26) umfasst, das eingerichtet ist, um in Rillen (30) positioniert zu werden, die parallel auf dem Feilenhalter (26) angeordnet sind, wobei jede Rille (30) eine unterschiedliche Tiefe aufweist, die jeweils einem bestimmten Wert des vertikalen Abstands zwischen der Achse der Rundfeile und der Hauptachse der Flachfeile entspricht.

10. Schärfer nach einem der vorhergehenden Ansprüche, der Haltemittel (19) umfasst, die eingerichtet sind, um eine Kettensägekette (4) während Schärfungs- und Hobelvorgängen zu halten, wobei die Haltemittel (19) insbesondere einen Haltefinger (15) umfassen.

11. Schärfer nach einem der vorhergehenden Ansprüche, der eine Feilenführung (27) umfasst, die den Feilenhalter (26) mittels eines Zahnstangensystems (29), das von einem Schrittmotor (8a, 8b) angetrieben wird, translatorisch führt.

12. Schärfer nach einem der vorhergehenden Ansprüche, der Bedienungsmittel (20) umfasst, die eingerichtet sind, um eine Zahnteilung, eine Anzahl von Zähnen, ein Zahnprofil, eine Funktion zur Schärfung eines Schneidezahns (10) und eine Funktion zum Hobeln eines Tiefenbegrenzers (14) eines Schneidezahns (10) einer Kettensägekette (4) auszuwählen, wobei der Schärfer (1) ferner eine Digitalanzeige, insbesondere eine LCD-Anzeige, zum Anzeigen der Informationen der Bedienungsmittel (20) umfasst.

13. Schärfer nach einem der vorhergehenden Ansprüche, wobei die Schärfungs- (9) und Hobelmittel (11) aufgespaltet sind und auf beiden Seiten des Kettenträgers (3) angeordnet sind, derart, dass sie gleichzeitig oder aufeinanderfolgend auf einen linken Schneidezahn und einen rechten Schneidezahn einer Kettensägekette von Typ mit abwechselnden Kettengliedern einwirken.

14. Schärfer nach einem der Ansprüche 1 bis 12, wobei die Schärfungs- (9) und Hobelmittel (11) an einem Träger montiert sind, der zwischen zwei symmetrischen Positionen schwenkbar ist, derart, dass aufeinanderfolgend auf sämtliche linken Schneidezähne und auf sämtliche rechten Schneidezähne einer Kettensägekette vom Typ mit abwechselnden Kettengliedern eingewirkt wird, ohne die Kette in ihrem Kettenträger (3) drehen zu müssen.

15. Schärfer nach einem der vorhergehenden Ansprüche zum Schärfen einer Kette, die Schneidezähne umfasst, die mit einem dachförmigen Teil versehen sind, wobei der Schärfer Detektionsmittel (23) umfasst, die eingerichtet sind, um den dachförmigen Teil (6) mit der geringsten Höhe zu detektieren, derart dass ein Bezugspunkt bestimmt wird, um sämtliche anderen dachförmigen Teile (6) der Schneidezähne einer Kettensägekette (4) gleichförmig zu schärfen.

16. Schärfer nach einem der vorhergehenden Ansprüche, der Detektionsmittel (23), insbesondere Sensoren, zum Detektieren eines Schneidezahns (10) mit stärkster Abnutzung umfasst.

## Claims

1. An automatic sharpener (1) for cutting teeth (10) of a chainsaw chain (4) of the type including links and cutting teeth (10) including a depth limiter (14), the sharpener including:
- an accommodation area (2) comprising a chain support (3) able to receive a chainsaw chain (4) of the aforementioned type, the longitudinal axis of the accommodation area defining a first horizontal direction, the median plane of the chain parallel to the lateral surfaces (32) of the links defining a vertical plane,
- a drive means (8c) for a preferably automatically forward-regulated and stepwise-regulated horizontal translation of said chainsaw chain (4) received in the accommodation area (2),
- a sharpening means (9) arranged to sharpen the cutting teeth (10) at different sharpening angles, after each translation of a chainsaw chain (4), and a means (11) for planing the depth limiter (14) of a cutting tooth (10), the planing means (11) and the sharpening means (9) respectively comprising a flat file and a round file removably fixed in a file holder (26),
**characterized in that**
the sharpening means (9) and the planing means (11) are arranged to simultaneously sharpen and plane the same cutting tooth (10) in a linear and reciprocating movement of the file holder (26) in a plane comprised between +/-10° relative to the first horizontal direction,
and **in that** the automatic sharpener (1) further includes a means (90a, 90b) for vertically positioning the file holder (26) arranged to exert, in the vertical direction, a planing pressure of the flat file on the cutting tooth (10) during the linear and reciprocating movement of the flat file simultaneously with the linear and reciprocating movement of the round file.

2. The sharpener according to claim 1, wherein the file holder (26) comprises a means for adjusting (12) the vertical distance between the axis of the round file and the main plane of the flat file.

3. The sharpener according to claim 1 or 2, wherein said vertical positioning means (90a, 90b) contains an electric motor and is arranged to adjust the planing pressure according to the intensity of the electric current flowing in this electric motor.

4. The sharpener according to any of the preceding claims, wherein the means (90a, 90b) for vertically positioning the file holder (26) is arranged to exert a planing pressure which is decreased at least during a final period of linear and reciprocating movement.

5. The sharpener according to any of the preceding claims, wherein said horizontal positioning means (8c) contains an electric motor and is arranged to adjust a sharpening pressure on the round file according to the intensity of the electric current flowing in this electric motor.

6. The sharpener according to claim 5, wherein the means (8c) for horizontally positioning the file holder (26) is arranged to exert a sharpening pressure which is decreased at least during a final period of linear and reciprocating movement.

7. The sharpener according to any of the preceding claims, wherein the file holder (26) is arranged to move in translation at a leading angle comprised between +/-10 degrees relative to the first horizontal direction.

8. The sharpener according to claim 7, wherein the leading angle is at least of +/- 1 degree.

9. The sharpener according to any of the preceding claims, including a means (12) for adjusting the file holder (26), arranged to be positioned in grooves (30) disposed in parallel on the file holder (26), each groove (30) being of different depth each corresponding to a determined value of the vertical distance between the axis of the round file and the main plane of the flat file.

10. The sharpener according to any of the preceding claims, including holding means (19) arranged to hold a chainsaw chain (4) during sharpening and planing operations, said holding means (19) including a stop finger (15).

11. The sharpener according to any of the preceding claims, including a file guide (27) which guides the file holder (26) in translation by means of a rack system (29) driven by a stepper motor (8a, 8b).

12. The sharpener according to any of the preceding claims, including control means (20) arranged to select a pitch of teeth, a number of teeth, a profile of teeth, a function of sharpening a cutting tooth (10) and a function of planing a depth limiter (14) of a cutting tooth (10) of a chainsaw chain (4), the sharpener (1) further including a digital display, in particular an LCD display for displaying the information of said control means (20).

13. The sharpener according to any of the preceding claims, wherein the sharpening (9) and planing (11) means are split and disposed on either side of the chain support (3), so as to act concomitantly or successively on a left cutting tooth and a right cutting tooth of a chainsaw chain of the type with alternating links.

14. The sharpener according to any of claims 1 to 12, wherein the sharpening (9) and planing (11) means are mounted on a pivotable support between two symmetrical positions, so as to act successively on all left cutting teeth and all right cutting teeth of a chainsaw chain of the type with alternating links, without having to return the chain in its chain support (3).

15. The sharpener according to any of the preceding claims, for sharpening a chain including cutting teeth provided with a roof-shaped portion, the sharpener including detection means (23) arranged to detect said roof-shaped portion (6) with the smallest height so as to determine a reference point for uniformly sharpening all the other roof-shaped portions (6) of the cutting teeth of a chainsaw chain (4).

16. The sharpener according to any of the preceding claims, including detection means (23), in particular sensors, for detecting a cutting tooth (10) of greater wear.
